# EUROPÄISCHE PATENTSCHRIFT

(11) **EP 2 168 793 B1**
(45) Veröffentlichungstag und Bekanntmachung des Hinweises auf die Patenterteilung: **10.08.2011**
(21) Anmeldenummer: 09012148.4
(22) Anmeldetag: 24.09.2009
(51) Int. Cl.: B60H 1/00

(54) **Klimaanlage**
Air conditioning device
Installation de climatisation

(30) Priorität: 25.09.2008 DE 102008048990
(43) Veröffentlichungstag der Anmeldung: 31.03.2010
(73) Patentinhaber: Behr GmbH & Co. KG, 70469 Stuttgart (DE)
(72) Erfinder: Graaf, Jürgen, 79469 Stuttgart (DE); Schwahn, Werner, 71701 Schwieberdingen (DE); Huber, Frank, 71229 Leonberg (DE); Fischle, Jochen, Dipl.-Ing., 71332 Waiblingen (DE)
(74) Vertreter: Grauel, Andreas

(56) Entgegenhaltungen:
- EP-A- 1 671 823
- EP-A- 1 872 985
- DE-A1- 19 524 068

## Beschreibung

Die Erfindung betrifft eine Klimaanlage, insbesondere für ein Kraftfahrzeug, gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Nach den jeweiligen Erfordernissen kann die Kraftfahrzeugklimaanlage dabei wirken, um die Luft in dem Kraftfahrzeuginnenraum zu erwärmen und/oder zu kühlen.

Die Luft- und Temperaturverteilung bzw. -regelung bezüglich des Frontbereichs und des Fondbereichs sowie des der rechten Seite und der linken Seite des Fahrzeuginnenraums kann dabei getrennt für jeden einzelnen Bereich oder für mehrere Bereiche gemeinsam ausgeführt werden. Ein Hauptluftstrom wird in mehrere Teilluftströme geleitet, wobei die Teilluftströme den verschiedenen Bereichen des Fahrzeuginnenraums zugeführt werden. Die Regelung der Durchflussmenge der einzelnen Teilluftströme erfolgt dabei über jeweilige Betätigungsklappen, die in der Klimaanlage an entsprechenden Positionen angeordnet sind. Zumindest eine Betätigungsklappe wird durch einen elektromotorischen Aktuator betätigt, um die Luftzufuhr zu einem Bereich des Fahrzeuginnenraums zu steuern. Im Stand der Technik bekannte Klimaanlagen verwenden dabei eine Kinematik, die über verschiedene Gehäuse verteilt ist.

Eine derartige klimaanlage ist im nächstliegenden Stand der Technik, Dokument DE 195 24 068, offenbart.

Bei einem Kinernatikverlauf über verschiedene Trennebenen ist die Wartung jedoch beispielsweise im Servicefall problematisch, da eine Zugänglichkeit der Bauteile der Klimaanlage von oben (in der Z-Richtung) nicht möglich ist. Somit ist im Servicefall eine einfache Montage und Demontage nicht gegeben. Vielmehr muss die gesamte Klimaanlage ausgetauscht bzw. ausgebaut werden. Auch ist es bei der im Stand der Technik bekannten getrennten Bauweise von Nachteil, dass es nicht möglich ist, die über verschiedene Gehäuse verteilte Kinematik des Luftverteilungssystems, d. h. die die verschiedenen Betätigungsklappen steuernden Aktuatoren, als Vormontagegruppe bereitzustellen.

Daher ist es die Aufgabe der vorliegenden Erfindung, eine Klimaanlage, insbesondere für ein Kraftfahrzeug, zur Verfügung zu stellen, bei welcher die Kinematik beispielsweise zu Wartungszwecken leicht für den Monteur zugänglich ist, und wobei im Servicefall kein Austausch der gesamten Klimaanlage erforderlich ist.

Diese Aufgabe der vorliegenden Erfindung wird durch eine Klimaanlage mit den Merkmalen gemäß Anspruch 1 gelöst. Vorteilhafte Weiterbildungen der vorliegenden Erfindung sind in den Unteransprüchen definiert.

Erfindungsgemäß wird eine Klimaanlage, insbesondere für ein Kraftfahrzeug, vorgesehen, welche ein Luftverteilungssystem umfasst, welches eine Kinematik mit einer Vielzahl von Aktuatoren aufweist, welche eine Vielzahl von Betätigungsklappen zum Regeln eines Luftstroms in verschiedenen Bereichen eines Kraftfahrzeugs betätigen. Erfindungsgemäß ist die Kinematik mittig zwischen den Betätigungsklappen und von diesen umgeben in einem einzigen Gehäuse angeordnet. Die zentrale Luftverteilung gemäß der Erfindung, welche in einem einzigen Gehäuse angeordnet ist, macht einerseits die Bereitstellung des Luftverteilungssystems als vormontierte Baugruppe möglich, und andererseits wird ein Kinematikverlauf über verschiedenen Trennebenen vermieden, wodurch eine erhöhte Wartungsfreundlichkeit erzielt wird. Insbesondere ist erfindungsgemäß im Servicefall nicht der Austausch der gesamten Klimaanlage, sondern lediglich der Kinematik, bzw. des Luftverteilungssystems erforderlich. Auch wird durch diese Konfiguration Im Servicefall eine einfache Montage und Demontage ermöglicht.

Gemäß einer bevorzugten Ausführungsform ist jeder Aktuator mit zumindest einer Betätigungsklappe über eine jeweilige Verbindungsstange verbunden. Vorzugsweise ist die Verbindungsstange an einem ersten Ende gelenkig mit einem Aktuator, insbesondere über ein Verbindungselement, verbunden und an einem zweiten Ende ist sie gelenkig mit einer Betätigungsklappe verbunden. Wenn ein Aktuator dazu verwendet wird, zwei Betätigungsklappen zu betätigen, werden zwei Verbindungsstangen, jeweils eine für jede Betätigungsklappe, eingesetzt. Alternativ ist jedoch auch möglich für zwei Betätigungsklappen, die synchron zu steuern sind, eine einzige Verbindungsstange vorzusehen, welche mit einem ersten Ende gelenkig mit dem Aktuator verbunden ist, und welche dann verzweigt ausgeführt ist, um zwei zweite Enden aufzuweisen, wovon jeweils eines einer Betätigungsklappe, beispielsweise zur Belüftung, zugeordnet ist.

Gemäß noch einer bevorzugten Ausführungsform ist die Kinematik, insbesondere das Luftverteilungssystem, als Vormontagegruppe hergestellt.

Vorzugsweise sind die Aktuatoren Elektromotoren. Besonders bevorzugt sind die Aktuatoren Schrittmotoren, die über eine Steuerelektronik ansteuerbar sind,

Es ist darüber hinaus besonders bevorzugt, wenn die Kinematik drei Aktuatoren, insbesondere Schrittmotoren umfasst.

Gemäß noch einer weiteren bevorzugten Ausführungsform sind in dem Luftverteilungssystem fünf Betätigungsklappen vorgesehen, welche durch die drei Aktuatoren betätigt werden. In der bevorzugten Ausführungsform sind vier der fünf Betätigungsklappen paarweise jeweils einem Aktuator zugeordnet und eine weitere Betätigungsklappe ist einzeln mit einem weiteren Aktuator verbunden. Es ist jedoch auch jegliche andere Konfiguration mit einer beliebigen Anzahl von Aktuatoren, die eine beliebige Anzahl von Betätigungsklappen steuern, möglich, solange dies zentral geschieht. Die Aktuatoren sind besonders bevorzugt als Schrittmotoren ausgebildet.

Gemäß einer weiteren bevorzugten Ausführungsform betätigt ein erster Aktuator eine Betätigungsklappe zum Entfrosten der Windschutzscheibe.

Vorzugsweise betätigt ein zweiter Aktuator eine Betätigungsklappe zur linksseitigen Belüftung des Kraftfahrzeugs sowie eine Betätigungsklappe zur rechtsseitigen Belüftung des Kraftfahrzeugs.

Darüber hinaus betätigt gemäß noch einer weiteren Ausführungsform ein dritter Aktuator eine Betätigungsklappe, die dem linken Fußraum des Fahrzeugs zugeordnet ist, sowie eine Betätigungsklappe, die dem rechten Fußraum des Fahrzeugs zugeordnet ist.

Besonders bevorzugt ist es bei der zentralen Luftverteilung, dass die Aktuatoren nebeneinander bzw. benachbart zueinander angeordnet sind.

Gemäß einer weiteren bevorzugten Ausführungsform sind die Betätigungsklappen ebenfalls in dem Gehäuse angeordnet.

Vorzugsweise ist jeder Betätigungsklappe eine erste Luftaustrittsöffnung in dem Gehäuse zugewiesen. Gemäß einer bevorzugten Ausführungsform sind somit fünf erste Luftaustrittsöffnungen in dem Gehäuse vorgesehen.

Darüber hinaus ist gemäß noch einer weiteren bevorzugten Ausführungsform in dem Gehäuse an der Position der Aktuatoren eine zweite Öffnung vorgesehen. Vorzugsweise ist das Gehäuse derartig ausgestaltet, dass in der zweiten Öffnung die Aktuatoren von einer Gehäusewand umgeben sind, d. h. die Aktuatoren sind in dem Gehäuse eingelassen.

Noch bevorzugter umfasst die Kinematik weiterhin eine Steuerelektronik zur Ansteuerung der Aktuatoren. Die Steuerelektronik eines jeden Aktuators kann an den Aktuatoren angeordnet sein und über einen Signalbus mit einem Hauptsteuergerät verbunden sein.

Gemäß einer weiteren bevorzugten Ausführungsform umfasst die Klimaanlage weiterhin einen Verdampfer zum Kühlen des Luftstroms und/oder zumindest eine Heizeinrichtung zum Erwärmen des Luftstroms und/oder einen elektrischen Zuheizer und/oder ein Gebläse.

Im Folgenden wird die Erfindung anhand eines Ausführungsbeispiels unter Bezugnahme auf die Zeichnung detailliert erläutert. In der Zeichnung zeigen:
- Fig.1A: eine perspektivische Ansicht eines Luftverteilungssystems von oben;
- Fig. 1 B: eine perspektivische Ansicht des Luftverteilungssystems von Fig. 1A von unten;
- Fig. 2A: eine perspektivische Ansicht des Luftverteilungssystems von Fig. 1A ohne Gehäuse von oben;
- Fig. 2B: eine perspektivische Ansicht des Luftverteilungssystems von Fig. 1A ohne Gehäuse von unten;
- Fig. 3A: eine perspektivische Ansicht von Komponenten des Luftverteilungs- systems;
- Fig. 3B: eine perspektivische Ansicht der Komponenten des Luftverteilungs- systems von Fig. 3A;
- Fig. 4A: eine perspektivische Ansicht von weiteren Komponenten des Luft- verteilungssystems;
- Fig. 4B: eine perspektivische Ansicht der Komponenten des Luftverteilungs- systems von Fig. 4A;
- Fig. 5A: eine perspektivische Ansicht von weiteren Komponenten des Luft- verteilungssystems;
- Fig. 5B: eine perspektivische Ansicht der Komponenten des Luftverteilungs- systems von Fig. 5A.

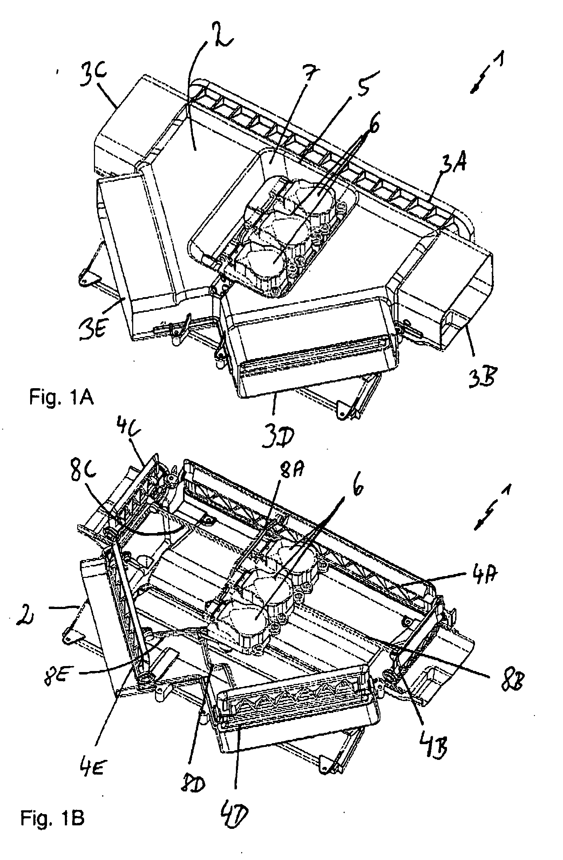

In Fig. 1A ist eine perspektivische Gesamtansicht eines Luftverteilersystems 1 gemäß einer Ausführungsform der Erfindung von oben gezeigt, während Fig. 1B das Luftverteilersystem 1 von Fig. 1A von unten zeigt. Das Luftverteilersystem 1 umfasst ein einziges Gehäuse 2, in welchem die einzelnen Komponenten des Luftverteilersystems 1 angeordnet sind. In dieser Ausführungsform weist das Gehäuse 2 fünf erste Luftaustrittsöffnungen 3A, 3B, 3C, 3D, 3E auf, durch welche die Zufuhr von Teilluftströmen eines Hauptluftstroms, welche zu verschiednen Bereichen eines Fahrzeuginnenraums geleitet werden, geregelt wird- Hier ist die Luftaustrittsöffnung 3A einem Teilluftstrom zur Entfrostung der Windschutzscheibe des Kraftfahrzeugs zugewiesen, die Luftaustrittsöffnung 3B ist einem Teilluftstrom zum rechten Fußraum zugewiesen, die Luftaustrittsöffnung 3C ist einem Teilluftstrom zum linken Fußraum zugewiesen, die Luftaustrittsöffnung 3D ist einem Teilluftstrom zur Belüftung der rechten Seite des Kraftfahrzeugs zugewiesen, und schließlich ist die Luftaustrittsöffnung 3E einem Teilluftstrom zur Belüftung der linken Seite des Kraftfahrzeugs zugeordnet. Die Luftaustrittsöffnungen 3A, 3B, 3C, 3D, 3E sind in dem Gehäuse 2 derartig angeordnet, dass sie durch eine jeweilige Betätigungsklappe 4A, 4B, 4C, 4D, 4E des Luftverteilungssystems 1 verschließbar sind. Das heißt, dass die Positionen der jeweiligen Luftaustrittsöffnungen 3A, 3B, 3C, 3D, 3E an dem Gehäuse 2 jeweils den Positionen der Betätigungsklappen 4A, 4B, 4C, 4D, 4E entsprechend angeordnet sind.

Das Gehäuse 2 weist darüber hinaus eine zweite Öffnung 5 auf, in welcher eine zentrale Kinematik des Luftverteilungssystems 1, welche hier aus drei Aktuatoren 6 in Form von Schrittmotoren besteht, angeordnet ist. Die Aktuatoren 6 bzw. Schrittmotoren sind dabei von einer Wand 7 des Gehäuses 2 umgeben, so dass sie in der Öffnung 5 in dem Gehäuse 2 eingelassen sind, was einen Schutz der Aktuatoren 6 vorsieht.

Wie in Fig. 1B erkannt werden kann, sind die Aktuatoren 6 über jeweilige Verbindungsstangen 8A, 8B, 8C, 8D, 8E mit den jeweiligen Betätigungsklappen 4A, 4B, 4C, 4D, 4E gelenkig verbunden. Bei entsprechender Steuerung eines oder mehrere der Aktuatoren 6 kann über eine entsprechende Verbindungsstange 8A, 8B, 8C, 8D, 8E die damit verbundene Betätigungsklappe 4A, 4B. 4C, 4D, 4E bewegt bzw. gedreht werden, so dass eine der Betätigungsklappe 4A, 4B, 4C, 4D, 4E zugeordnete Luftaustrittsöffnung 3A, 3B, 3C, 3D, 3E geöffnet oder geschlossen wird. Weiterhin kann in Fig. 1B gesehen werden, dass das Gehäuse 2 ein nach unten geöffnetes Gehäuse ist, das keinen Gehäuseboden aufweist.

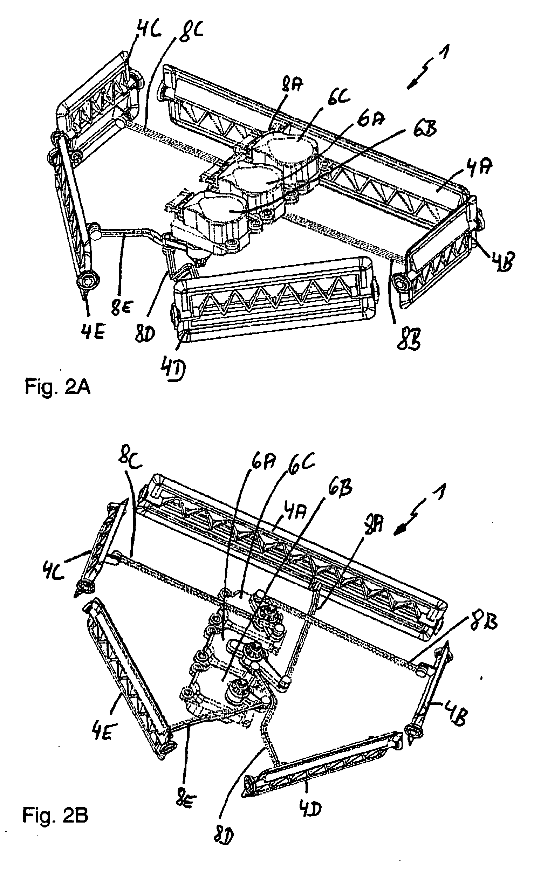

Fig. 2A zeigt eine perspektivische Ansicht des Luftverteilungssystems 1 von Fig. 1A ohne Gehäuse 2 von oben, wohingegen Fig. 2B eine perspektivische Ansicht des Luftverteilungssystems 1 von Fig. 1A ohne Gehäuse 2 von unten zeigt. Wie in beiden Figuren erkannt werden kann, sind die drei Aktuatoren 6A, 6B, 6C nebeneinander in einer Reihe zentral zwischen den Betätigungsklappen 4A, 4B, 4C, 4D, 4E angeordnet. Der erste Aktuator 6A ist zwischen dem zweiten Aktuator 6B und dem dritten Aktuator 6C angeordnet und ist über eine Verbindungsstange 8A mit der Betätigungsklappe 4A für einen Teilluftstrom zum Entfrosten der Windschutzscheibe eines Kraftfahrzeugs gelenkig verbunden. Weiterhin ist der zweite Aktuator 6B einerseits über eine Verbindungsstange 8B mit einer Betätigungsklappe 4B, welche hier für die Regelung des Teilluftstromes zum rechten Fußraum vorgesehen ist, und andererseits über eine weitere Verbindungsstange 8C mit einer Betätigungsklappe 4C, welche hier für die Regelung des Teilluftstroms zum linken Fußraum des Kraftfahrzeugs vorgesehen ist, verbunden. Schließlich ist der dritte Aktuator 6C über eine Verbindungsstange 8D mit einer Betätigungsklappe 4D, welche hier für die Regelung des Teilluftstroms zur rechtsseitigen Belüftung des Kraftfahrzeugs vorgesehen ist, und über eine weitere Verbindungsstange 8E mit einer Betätigungsklappe 4E verbunden, welche hier für die Regelung des Teilluftstroms zur linksseitigen Belüftung des Kraftfahrzeugs vorgesehen ist.

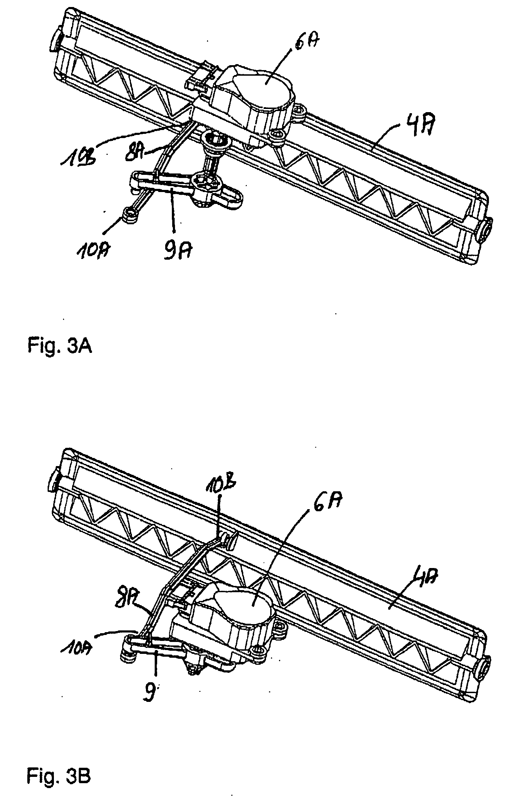

Fig. 3A ist eine perspektivische Ansicht von einzelnen Komponenten des Luftverteilungssystems 1; und Fig. 3B ist eine perspektivische Ansicht der Komponenten des Luftverteilungssystems von Fig. 3A. Hier die Betätigungsklappe 4A zur Regelung des Teilluftstroms zum Entfrosten der Windschutzscheibe dargestellt. Die Betätigungsklappe 4A ist über die Verbindungsstange 8A mit dem Aktuator 6A gelenkig verbindbar. In Fig. 3A ist jedoch der Zustand gezeigt, wo der Aktuator 6A noch nicht mit der Betätigungsklappe 4A verbunden bzw. vormontiert ist, wohingegen in Fig. 3B der zusammengesetzte bzw. montierte Zustand des Elektromotors 6A mit der Betätigungsklappe 4A gezeigt ist. Dabei wird der Elektromotor 6A über ein erstes Verbindungselement 9, welches an einer Unterseite des Elektromotors 6A angeordnet ist, an einem ersten Ende 10A der Verbindungsstange 8A fixiert. Die Verbindungsstange 8A weist ein zweites Ende 10B auf, welches wiederum gelenkig mit der Betätigungsklappe 4A verbunden ist. Über diese Verbindung lässt sich die Betätigungsklappe 4A entsprechend einem Drehwinkel des Aktuatros 6A öffnen oder schließen bzw. verstellen, um die Luftzufuhr eines Teilluftstrom zum Entfrosten einer Windschutzscheibe zu regeln.

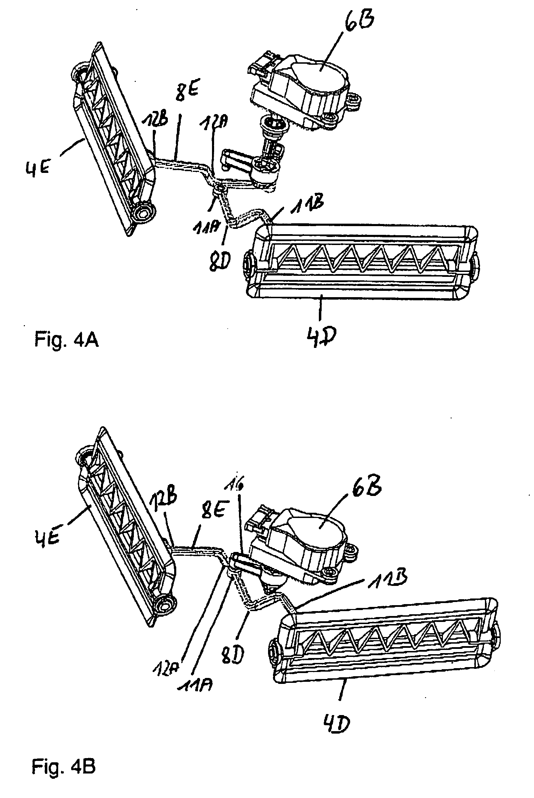

Fig. 4A ist eine perspektivische Ansicht von weiteren Komponenten des Luftverteilungssystems; und Fig. 4B ist eine perspektivische Ansicht der Komponenten des Luftverteilungssystems von Fig. 4A. Hier ist der zweite Aktuator 6B gezeigt, welcher über die Verbindungsstange 8D mit der Betätigungsklappe 4D zum Regeln eines Teilluftstroms zur rechtsseitigen Belüftung des Kraftfahrzeugs und über die Verbindungsstange 8E mit der Betatigungsklappe 4E zum Regeln eines Teilluftstroms zur linksseitigen Belüftung des Kraftfahrzeugs verbindbar. In Fig. 4A ist jedoch wieder der noch nicht verbundene Zustand gezeigt. Fig. 4B zeigt dagegen den montierten Zustand, in welchem das erste Ende 11A der Verbindungsstange 8D und das erste Ende 12A der Verbindungsstange 8E gemeinsam über ein zweites Verbindungselement 16 mit dem zweiten Aktuator 6B verbunden sind. Das zweite Ende 11 B der Verbindungsstange 8D ist mit der Betätigungsklappe 4D und das zweite Ende 12B der Verbindungsstange 8E ist mit der Betätigungsklappe 4E gelenkig verbunden, so dass die Betätigungsklappen 4D und 4E jeweils entsprechend einem Drehwinkel des Aktuators 6B betätigbar sind, um eine Luftzufuhr eines Teilluftstrom zur links- und rechtsseitigen Belüftung des Kraftfahrzeugs zu regeln bzw. die entsprechende Öffnung 3D und 3E in dem Gehäuse 2 zu öffnen oder zu schließen.

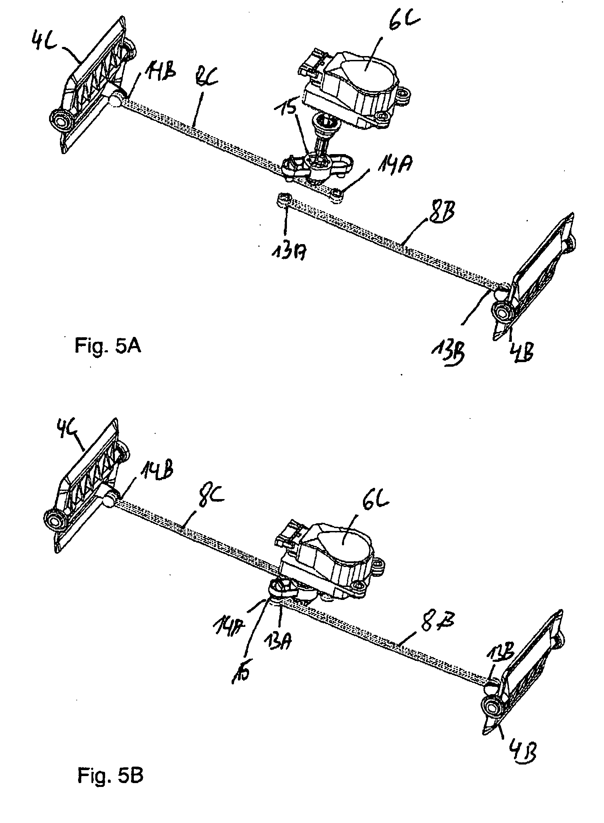

Fig. 5A ist eine perspektivische Ansicht von weiteren Komponenten des Luftverteilungssystems; und Fig. 5B ist eine perspektivische Ansicht der Komponenten des Luftverteilungssystems von Fig. 5A. Hier ist der dritte Aktuator 6C gezeigt, welcher über die Verbindungsstange 8B mit der Betätigungsklappe 4B zum Regeln eines Teilluftstroms der dem rechten Fußraum des Kraftfahrzeugs zugeordnet ist und über die Verbindungsstange 8C mit der Betätigungsklappe 4C zum Regeln eines Teilluftstroms der dem linken Fußraum des Kraftfahrzeugs zugeordnet ist, verbindbar. In Fig. 5A ist jedoch wieder der noch nicht verbundene Zustand gezeigt. Fig. 5B zeigt den montierten Zustand, in welchem das jeweilige erste Ende 13A der Verbindungsstange 8B und das erste Ende 14A der Verbindungsstange 8C gemeinsam über ein drittes Verbindungselement 15 mit dem dritten Aktuator 6C verbunden sind. Das zweite Ende 13B der Verbindungsstange 8B ist mit der Betätigungsklappe 4B und das zweite Ende 14B der Verbindungsstange 8C ist mit der Betätigungsklappe 4C gelenkig verbunden, so dass die Betätigungsklappen 4C und 4B jeweils entsprechend einem Drehwinkel des Aktuators 6C betätigbar sind, um eine Luftzufuhr eines Teilluftstrom zum linken und rechten Fußraum des Kraftfahrzeugs zu regeln bzw. die entsprechende Öffnung 3C und 3B in dem Gehäuse 2 zu öffnen oder zu schließen.

Insgesamt betrachtet kann durch das zentrale Luftverteilungssystem 1 einerseits eine vormontierte Baugruppe bereitgestellt werden, und andererseits eine bessere Wartungsfreundlichkeit erzielt werden.

### Bezugszeichenliste

- 1: Luftverteilungssystem
- 2: Gehäuse
- 3A, 38, 3C, 3D: erste Luftaustrittsöffnungen
- 4A, 4B, 4C, 4D: Betätigungsklappen
- 5: zweite Öffnung
- 6A: erster Aktuator
- 6B: zweiter Aktuator
- 6C: dritter Aktuator
- 7: Wand
- 8A, 8B, 8C, 8D: Verbindungsstangen
- 9: erstes Verbindungselement
- 10A: erstes Ende der Verbindungsstange 8A
- 10B: zweites Ende der Verbindungsstange 8A
- 12A: erstes Ende der Verbindungsstange 8E
- 12B: zweites Ende der Verbindungsstange 8E
- 13A: erstes Ende der Verbindungsstange 8B
- 13B: zweites Ende der Verbindungsstange 8B
- 14A: erstes Ende der Verbindungsstange 8C
- 14B: zweites Ende der Verbindungsstange 8C
- 15: drittes Verbindungselement
- 16: zweites Verbindungselement

## Patentansprüche

1. Klimaanlage, insbesondere für ein Kraftfahrzeug, welche ein Luftverteilungssystem (1) umfasst, welches eine Kinematik mit einer Vielzahl von Aktuatoren (6A, 6B, 6C) aufweist, welche eine Vielzahl von Betätigungsklappen (4A, 4B, 4C, 4D, 4E) zum Regeln eines Luftstroms in verschiedenen Bereichen eines Kraftfahrzeugs betätigen, **dadurch gekennzeichnet, dass** die Kinematik mittig zwischen den Betätigungsklappen und von diesen umgeben in einem einzigen Gehäuse (2) angeordnet ist.

2. Klimaanlage nach Anspruch 1, **dadurch gekennzeichnet, dass** jeder Aktuator (6A, 6B, 6C) mit zumindest einer Betätigungsklappe (4A, 4B, 4C, 4D, 4E) über eine jeweilige Verbindungsstange (8A, 8B, 8C, 8D, 8E) verbunden ist.

3. Klimaanlage nach Anspruch 1 oder 2, **dadurch gekennzeichnet, dass** die Kinematik, insbesondere das Luftverteilungssystem (1), als Vormontagegruppe hergestellt ist.

4. Klimaanlage nach einem oder mehreren der Ansprüche 1 bis 3, **dadurch gekennzeichnet, dass** die Aktuatoren (6A, 6B, 6C) Elektromotoren, insbesondere Schrittmotoren sind.

5. Klimaanlage nach Anspruch 4, **dadurch gekennzeichnet dass** die Kinematik drei Schrittmotoren (6A, 6B, 6C) umfasst.

6. Klimaanlage nach Anspruch 4 oder 5, **dadurch gekennzeichnet, dass** in dem Luftverteilungssystem (1) fünf Betätigungsklappen (4A, 4B, 4C, 4D, 4E) vorgesehen sind, welche durch die drei Schrittmotoren (6A, 6B, 6C) betätigt werden.

7. Klimaanlage nach einem oder mehreren der Ansprüche 1 bis 6, **dadurch gekennzeichnet, dass** ein erster Aktuator (6A) eine Betätigungsklappe (4A) zum Entfrosten einer Windschutzscheibe betätigt.

8. Klimaanlage nach einem oder mehreren der Ansprüche 1 bis 7, **dadurch gekennzeichnet, dass** ein zweiter Aktuator (6B) jeweils eine Betätigungsklappe (4E) zur linksseitigen Belüftung des Kraftfahrzeugs sowie eine Betätigungsklappe (4D) zur rechtsseitigen Belüftung des Kraftfahrzeugs betätigt.

9. Klimaanlage nach einem oder mehreren der Ansprüche 1 bis 8, **dadurch gekennzeichnet dass** ein dritter Aktuator (6C) jeweils eine Betätigungsklappe (4C) betätigt, die dem linken Fußraum des Fahrzeugs zugeordnet ist, sowie eine Betätigungsklappe (4B), die dem rechten Fußraum des Fahrzeugs zugeordnet ist.

10. Klimaanlage nach einem oder mehreren der Ansprüche 1 bis 9, **dadurch gekennzeichnet, dass** die Aktuatoren (6A, 6B, 6C) nebeneinander angeordnet sind.

11. Klimaanlage nach einem oder mehreren der Ansprüche 1 bis 10, **dadurch gekennzeichnet, dass** die Betätigungsklappen (4A, 4B, 4C, 4D, 4E) ebenfalls in dem Gehäuse (2) angeordnet sind.

12. Klimaanlage nach einem oder mehreren der Ansprüche 1 bis 11, **dadurch gekennzeichnet, dass** jeder Betätigungsklappe (4A, 48, 4C, 4D, 4E) eine erste Luftaustrittsöffnung (3A, 3B, 3C, 3D, 3E) in dem Gehäuse (2) zugeordnet ist.

13. Klimaanlage nach einem oder mehreren der Ansprüche 1 bis 12, **dadurch gekennzeichnet, dass** in dem Gehäuse (2) an der Position der Aktuatoren eine zweite Öffnung (5) vorgesehen ist.

14. Klimaanlage nach einem oder mehreren der Ansprüche 1 bis 13, **dadurch gekennzeichnet, dass** die Kinematik weiterhin eine Steuerelektronik zur Ansteuerung der Aktuatoren (6A, 6B, 6C) umfasst.

15. Klimaanlage nach einem der Ansprüche 1 bis 14, **dadurch gekennzeichnet, dass** die Kramahrzeugklimaanlage weiterhin einen Verdampfer zum Kühlen des Luftstroms und/oder zumindest eine Heizeinrichtung zum Erwärmen des Luftstroms und/oder einen elektrischen Zuheizer und/oder ein Gebläse umfasst.

## Claims

1. An air conditioning system, in particular for a motor vehicle, which comprises, an air distribution system (1) having a kinematic system with a large number of actuators (6A, 6B, 6C) which actuate a large number of actuating flaps (4A, 4B, 4C, 4D, 4E) for controlling an air flow in various regions of a motor vehicle, **characterized in that** the kinematic system is located in the center between the actuating flaps and is enclosed by same in a single housing (2)_{.}

2. The air conditioning system according to claim 1, **characterized in that** each actuator (6A, 6B, 6C) is connected to at least one actuating flap (4A, 4B, 4C, 4D, 4E) via one connecting rod (8A, 8B, 8C, 8D, 8E).

3. The air conditioning system according to claim 1 tor 2, **characterized in that** the kinematic system, in particular the hair distribution system (1), is manufactured as a preassembly group.

4. The air conditioning system according to one or more of the claims 1 to 3, **characterised in that** the actuators (6A, 6B, 6C) are electric rectors, in particular motors.

5. The air conditioning system according to claim 4, **characterized in that** the kinematic system comprises three stepper motors (6A, 6B, 6C).

6. The air conditioning system according to claim 4 or 5, **characterized in that** five actuating flaps (4A, 4B, 4C, 4D, 4E) which are actuated by the three stepper motors (CA, 6B, 6C) are provided in the air distribution system (1).

7. The air conditioning system according to one or more of the claims 1 to 6, **characterized in that** a first actuator (6A) actuates an actuating flap (4A) for defrosting a windshield.

8. The air conditioning system according to one or more of the claims 1 to 7, **characterized in that** a second actuator (6B) actuates an actuating flap (4E) for ventilating the left side of the motor vehicle, and an actuating g. flap (4D) for the right side of the motor vehicle.

9. The air conditioning system according to one or more of the claims 1 to 8, **characterized in that** a third actuator (6C) actuates an actuating flap (4C) assigned to the left footwell of the vehicle, and an actuating flap (4B) assigned to the right footwell of the vehicle.

10. The air conditioning system according to one or more of the claims 1 to 9, **characterized in that** the actuators (6A, 6B, 6C) are disposed next to one another.

11. The air conditioning system according to one or more of the claims 1 to 10, **characterized in that** the actuating flaps (4A, 4B, 4C, 4D, 4E) are likewise disposed in the housing (2).

12. The air conditioning system according to one or more of the claims 1 to 11, **characterized in that** a first air outlet opening (3A, 3B, 3C, 3D, 3E) in the housing (2) is assigned to each actuating flap (4A, 43, 4C, 4D, 4E).

13. The air conditioning system according to one or more of the claims 1 to 12, **characterized in that** a second opening (5) is provided it the housing (2) as the position of the actuators.

14. The air conditioning system according to one or more of the claims 1 to 13, **characterised in that** the kinematic system furthermore comprises control electronics for controlling the actuators (6A, 68, 6C).

15. The air conditioning system according to one of the claims 1 to 14, **characterized in that** the motor vehicle air conditioning system furthermore comprises an evaporator for cooling the air flow and/or at least one heating device for heating the air flow and/or an additional electric heater and/or a blower.

## Revendications

1. Système de climatisation, en particulier pour un véhicule automobile, qui comprend un système de répartition d'air (1) qui présente une cinématique comportant une pluralité d'actionneurs (6A, 6B, 6C) qui actionnent une multiplicité de volets de commande (4A, 4B, AC, AD, 4E), servant à la régulation d'un flux d'air dans différentes zones d'un véhicule automobile,
**caractérisé en ce que** la cinématique est disposée dans un seul boîtier (2), au milieu entre les volets de commande entourée par ces volets de commande.

2. Système de ce climatisation selon la revendication 1, **caractérisé en ce que** chaque actionneur (6A, 6B, 6C) est raccordé à au moins un volet de commande (4A, 4B, 4C, 4D, 4E), par une tige de raccordement respective (8A, 8B, 8C, 8D, 8E).

3. Système de climatisation selon la revendication 1 ou 2, **Caractérisé en ce que** la cinématique, en particulier le système de répartition d'air (1), est réalisée comme une ensemble préassemblé.

4. Système de climatisation selon une ou plusieurs des revendications 1 à 3, **caractérisé en ce que** les actionneurs (6A, 6B, 6C) sont des moteurs électriques, en particulier des moteurs pas à pas,

5. Système de climatisation selon la revendication 4, **caractérisé en ce que** la cinématique comprend trois moteurs pas à pas (6A, 6B, 6C).

6. Système de climatisation selon la revendication 4 ou 5, **caractérisé en ce qu'**il est prévu, dans le système de répartition d'air (1), cinq volets de commande (4A, 4B, 4C, 4D, 4E) qui sont actionnés par les trois moteurs pas à pas (6A, 6B, 6C).

7. Système de climatisation selon une ou plusieurs des revendications 1 à 6, **caractérisé en ce qu'**un premier actionneur (6A) actionne un volet de commande (4A) pour le dégivrage d'un pare-brise.

8. Système de climatisation selon une ou plusieurs des revendications 1 à 7, **caractérisé en ce qu'**un deuxième actionneur (6B) actionne à chaque fois un volet de commande (4E) pour la ventilation, côté gauche, du véhicule automobile, ainsi qu'un volet de commande (4D) pour à ventilation, côté droit, du véhicule automobile.

9. Système de climatisation selon une ou plusieurs des revendications 1 à 8, **caractérisé en ce qu'**un troisième **actionneur** (6C) actionne à chaque fois un volet de commande (4C) qui est associé à l'espace pour les pieds, côté gauche, du véhicule, ainsi qu'un volet de commande (4B) qui est associé à l'espace pour les pieds, côté droit, du véhicule.

10. Système de climatisation selon une ou plusieurs des revendications 1 à 9, **caractérisé en ce que** les actionneurs (6A, 6B, 6C) sont disposés les uns à côté des autres.

11. Système de climatisation selon une ou plusieurs des revendications 1 à 10, **caractérisé en ce que** les volets de commande (4A, 4B, 4C, 4D, 4E) sont disposés également dans le boîtier (2).

12. Système de climatisation selon une ou plusieurs des revendications 1 à 11, **caractérisé en ce qu'**une première ouverture de sortie d'air (3A, 3B, 3C, 3D, 3E), dans le boîtier (2), est associée à chaque volet de commande (4A, 4B, 4C, AD, 4E).

13. Système de climatisation selon une ou plusieurs des revendications 1 à 12, **caractérisé en ce qu'**une deuxième ouverture (5) est prévue dans le boîtier (2), au niveau de la position des actionneurs.

14. Système de climatisation selon une ou plusieurs des revendications 1 à 13, **caractérisé en ce que** la cinématique comprend en outre une électronique de commande pour le pilotage des actionneurs (6A, 6B, 6C).

15. Système de climatisation selon l'une quelconque des revendications 1 à 14, **caractérisé en ce que** le système de climatisation du véhicule automobile comprend en outre un évaporateur servant au refroidissement du flux d'air et / ou au moins un dispositif de chauffage servant à chauffer le flux d'air et / ou un dispositif de chauffage électrique auxiliaire et / ou un ventilateur.
